# EUROPEAN PATENT APPLICATION

(11) **EP 2 068 235 A2**
(43) Date of publication of application: **10.06.2009**
(21) Application number: 08169397.0
(22) Date of filing: 19.11.2008
(51) Int. Cl.: G06F 3/048, G06F 3/041

(54) **Input device, display device, input method, display method, and program**

(30) Priority: 07.12.2007 JP 2007317723
(71) Applicant: Sony Corporation, Tokyo 108-0075 (JP)
(72) Inventor: Narita, Tomoya, Tokyo 108-0075 (JP); Tsuzaki, Ryoichi, Tokyo 108-0075 (JP); Miyashita, Ken, Tokyo 108-0075 (JP); Matsuda, Kouichi, Tokyo 108-0075 (JP)
(74) Representative: Körber, Wolfhart

(57) **Abstract**

An image acquisition section 105 obtains an image of a finger by bringing the finger into touch with a display 13 formed of a device including an image pickup device and picture elements or by bringing the finger closer to the display without touching the display. A computing section 120 determines a center-of-gravity position of the finger, based on the obtained image of the finger. An information generating section 125 generates information for operating the cellular phone based on a displacement of the center-of-gravity position of the finger r. A determination section 115 determines whether the finger has touched the screen or not, based on the touch area between the finger and the screen. A display section 130 displays a virtual sign 14 indicating a reference point for subsequent movement of the finger, at a first position that the finger has touched the screen.

## Description

### CROSS-REFERENCE TO RELATED APPLICATION

The present invention contains subject matter related to Japanese Patent Application JP 2007-317723, filed in the Japan Patent Office on December 7, 2007, the entire contents of which being incorporated herein by reference.

### BACKGROUND OF THE INVENTION

### FIELD OF THE INVENTION

The present invention relates to an input device, a display device, an input method, a display method, and a program. More specifically, the invention relates to a user interface of an apparatus, which supplies information through a screen of the display device.

### DESCRIPTION OF THE RELATED ART

In recent years, a lot of technologies that directly supply information to a liquid crystal display device of a TV receiver or the like have been proposed. Detection of information associated with an operation of a user or detection of information given on a card presented by the user, based on a quantity of infrared light emitted to outside from inside a display device (information input/output device) and a quantity of a reflected amount of the infrared light, for example, has been proposed.

There has also been proposed a display panel in which an optical sensor is included in a liquid crystal display device, and external light is detected by the optical sensor, thereby allowing supply of information using light. An apparatus, in which a touch panel is included in a vehicle-mounted device having a navigation function and a content reproducing function, has also become widespread. Then, a technology that performs selection on a menu and switching of display by a finger gesture using the touch panel has also been proposed. With these technologies and apparatus, the user may supply predetermined information to the display device without operating a mouse or a keyboard.

### SUMMARY OF THE INVENTION

In the apparatus that includes the touch panel, however, the display screen size of the apparatus has also increased recently. When a touch-panel input operation is performed by a hand while holding the apparatus by the same hand, the holding of the apparatus may become unstable or a finger movement on a large screen may be hindered due to the weight or size of the apparatus. An error in the input operation may thereby arise.

The present invention has been therefore made. The present invention provides a novel and improved input device, a novel and improved display device, a novel and improved input method, a novel and improved display method, and a novel and improved program which allow an input operation without moving a hand over a wide range on a display screen of an apparatus including the input device or the display device, while holding the apparatus by the hand.

According to an embodiment of the present invention, there is provided an input device including:
an image acquisition section that obtains an image of an object for supplying information to a display device of an apparatus, the image being obtained by bringing the object into touch with a screen of the display device or by bringing the object closer to the screen of the display device to a position capable of detecting the object without touching the screen, the display device being formed of a device including an image pickup device and picture elements;
a computing section that computes a center-of-gravity position of the object using the image of the object obtained by the image acquisition section; and
an information generating section that generates information for operating the apparatus based on a displacement of the center-of-gravity position of the object corresponding to movement of the object, as the input information from the object.

With this arrangement, the image of the object (such as a finger) is captured, and a contact state or an approaching state of the object is image processed. The displacement of the center-of-object position of the object is thereby obtained. Then, based on the obtained displacement, the information for operating the apparatus is generated, as the input information from the object. Even a slight movement of the object may be thereby accurately detected, and may be converted into the input information from the object. Accordingly, the screen may be operated by one hand without moving the hand and fingers that hold the apparatus over a wide range on the display screen. Further, since the screen may be easily operated (e.g. scrolled, zoomed, or tilted, or the like) in response to a slight movement of the finger, a user may operate the apparatus in various manners of holding the apparatus, according to the situation.

The input device may further include a determination section that determines whether the object has approached the display device to the position capable of detected without touching the screen or has touched the display device, based on the image of the object obtained by the image acquisition section.

While the determination section determines that the object is continuously approaching the position capable of being detected without touching the screen or is continuously in touch with the display device, the computing section may repeat computation of the center-of-the gravity position of the object. Then, the information generating section may keep on generating the information for operating the apparatus, based on a displacement of the center-of-the-gravity position of the object repeatedly computed.

When the determination section determines that the object has separated from the display device by a predetermined distance or more, the computing section may stop computing the center-of-the-gravity position of the object. Then, the information generating section may stop generating the information for operating the apparatus.

When the determination section determines that a plurality of the objects have approached the display device to positions capable of being detected at a plurality of points of the screen without touching the screen, or are continuously in touch with the display device at the points, the information generating section may generate the information for operating the apparatus, based on a relative relationship between displacements of the center-of-the-gravity portions of the objects at the points.

With this arrangement, based on the relative relationship between the displacements of the center-of-the gravity positions of the objects, a different interaction may be implemented. In other words, a user interface that causes the apparatus to execute a different operation based on the relative relationship between the displacements of the center-of-the-gravity positions of the objects may be established.

When the determination section determines that a plurality of the objects have approached the display device to positions capable of being detected at a plurality of points of the screen without touching the screen, or are continuously in touch with the display device at the points, the information generating section may generate the information for executing a different function of the apparatus, based on a displacement of the center-of-the-gravity portion of each of the objects at the respective points.

With this arrangement, according to a position at which the object has approached or touched the display device, the apparatus may be easily made to perform a different operation by one hand.

When the determination section determines that a plurality of the objects have approached the display device to positions capable of being detected at a plurality of points of the screen without touching the screen, or are continuously in touch with the display device, the information generating section may generate the information for operating the apparatus, based on a sum of displacements of the center-of-the-gravity portions of the objects at the respective points.

With this arrangement, the apparatus may be operated more speedily in response to movement of the object.

The determination section may determine whether the object has approached the display device to the position capable of being detected without touching the screen or has touched the display device, based on brightness of the obtained image of the object.

The distance between the object and the display device may be obtained based on the brightness of the image of the object, and an image on the display device that is closer to the object may be displayed more distant from the object.

The input device may further include:
a selecting section that specifies a selection range of images displayed at different locations on the display device based on the brightness of the image of the object, and selects an image within the selected range, when the determination section determines that the object has approached the display device to the position capable of being detected without touching the screen and then determines that the object has touched the display device based on the image of the object obtained by the image acquisition section.

The information for operating the apparatus may be used for one of controls of scrolling, zooming, and tilting an image displayed on the display device.

The information generating section may generate the information for operating the apparatus so that an amount of scrolling, zooming, or tilting the image displayed on the display device is changed based on brightness of the image of the object.

The information indicating the displacement of the center-of-gravity information of the object may include at least one of a difference between arbitrary two points on a moving trajectory of the object, a moving direction of the object, a moving speed of the object, and an acceleration of the object.

The apparatus may be a portable-type apparatus.

The object may be a finger of a user who holds the portable-type apparatus.

According to another embodiment of the present invention, there is provided a display device including:
an image acquisition section that obtains an image of an object for supplying information to a display device of an apparatus, the image being obtained by bringing the object into touch with a screen of the display device or by bringing the object closer to the screen of the display device to a position capable of detecting the object without touching the screen, the display device being formed of a device including an image pickup device and picture elements;
a computing section that computes a center-of-gravity position of the object based on the image of the object obtained by the image acquisition section;
an information generating section that generates information for operating the apparatus, based on a displacement of the center-of-gravity position of the object corresponding to movement of the object;
a determination section that determines whether the object has approached the display device to the position capable of being detected without touching the screen or has touched the display device, based on brightness of the image of the object obtained by the image acquisition section; and
a display section that displays a virtual sign at a position first determined by the determination section that the object has touched the display device or at the position first determined by the determination section that the object has approached the display device without touching the screen, as a reference point for subsequent movement of the object.

With this arrangement, by image processing the image of the object, the displacement of the center-of-gravity position of the object is obtained. Then, based on the obtained displacement, the information for operating the apparatus is generated. Even a slight movement of the object may be thereby accurately detected, and may be converted into the input information from the object. Accordingly, the display screen may be operated by one hand without moving the hand and fingers that hold the apparatus over a wide range on the display screen. The virtual sign is implemented by software. Thus, the virtual sign may be displayed at a desired position and a desired timing of the user or may be erased rather than being displayed at a fixed position in related art implemented by hardware. For this reason, an object on the screen that the user desires to gaze may be prevented from being hidden by a finger or the virtual sign.

When the determination section determines that the object has separated from the display device by a predetermined distance or more, the display section may stop display of the virtual sign.

The determination section may determine whether the object has approached the display device to the position capable of being detected without touching the screen or has touched the display device, based on the brightness of the image of the object obtained by the image acquisition section. The display section may display an image which is closer to the position approached by the object or the position touched by the object to be more distant from the object.

According to another embodiment of the present invention, there is provided a display device including:
a display section that displays at least one fixed virtual sign at a fixed position on a screen of the display device formed of a device including an image pickup device and picture elements, the at least one fixed virtual sign serving as a reference point when an object for supplying information approaches or touches the display device;
an image acquisition section that obtains an image of the object by bringing the object into touch with the at least one fixed virtual sign or bringing the object closer to the at least one fixed virtual sign to a position capable of detecting the object without touching the screen;
a computing section that computes a center-of-gravity position of the object based on the image of the object obtained by the image acquisition section; and
an information generating section that generates information for operating an apparatus including the display device, based on a displacement of the center-of-gravity position of the object corresponding to movement of the object.

The fixed virtual sign (pseudo input device) is thereby displayed at the fixed location on the screen of the display device by software. With this arrangement, the pseudo input device may be arranged anywhere, in any number, and at a desired timing, if the size of the pseudo input device is not larger than the size of the screen and the location of the pseudo input device is within the screen.

The size (area) of the object may be detected from the image of the object in touch with the display screen. This makes it possible to receive information that reflects the manner of touching the pseudo input device more faithfully and more appropriately. When the pseudo input device is touched by the tip of the finger and moved, for example, a small displacement (numerical value increase or decrease) is received. When the pseudo input device is largely touched by the belly of the finger, a large displacement is received.

The fixed virtual sign may be projected onto the screen of the display device, and may function as a pseudo input device where the information for operating the apparatus is generated according to a state where the object touches the at least one virtual sign.

The fixed virtual sign may virtually rotate centering on an axis thereof, in response to the movement of the object. Then, the information generating section may generate the information for operating the apparatus based on a relative or absolute displacement in a rotating direction of the fixed virtual sign.

The information generating section may generate the information for operating the apparatus when the relative or absolute displacement in the rotating direction of the fixed virtual sign exceeds a predetermined threshold value.

The information for operating the apparatus may be used to increase or decrease a desired numerical value, based on the relative or absolute displacement in the rotating direction of the fixed virtual sign.

The information generating section may generate the information for operating the apparatus so that a change amount of the numerical value differs according to a touch position between the object and the fixed virtual sign.

According to another embodiment of the present invention, there is provided an information input method including the steps of:
bringing an object for supplying information into touch with a screen of a display device or bringing the object closer to the screen of the display device to a position capable of detecting the object without touching the screen, thereby obtaining an image of the object, the display device being formed of a device including an image pickup device and picture elements;
computing a center-of-gravity position of the object based on the obtained image of the object; and
generating information for operating an apparatus including the display device, as input information from the object, based on a displacement of the center-of-gravity position of the object corresponding to movement of the object.

According to another embodiment of the present invention, there is provided a display method including the steps of:
bringing an object for supplying information into touch with a screen of a display device or bringing the object closer to the screen of the display device to a position capable of detecting the object without touching the screen, thereby obtaining an image of the object, the display device being formed of a device including an image pickup device and picture elements;
computing a center-of-gravity position of the object based on the obtained image of the object;
generating information for operating an apparatus including the display device, based on a displacement of the center-of-gravity position of the object corresponding to movement of the object;
obtaining brightness of the obtained image of the object and determining whether the object has approached the display device without touching the screen or has touched the display device, based on the obtained brightness; and
displaying a virtual sign at a position first determined that the object has touched the display device or at the position first determined that the object has approached the display device without touching the screen, as a reference point for subsequent movement of the object.

According of another embodiment of the present invention, there is provided a program for causing a computer to implement functions of the input device described above.

According to another embodiment of the present invention, there is provided a program for causing a computer to implement functions of the display device described above.

According to the embodiments of the present invention described above, a user interface that implements an easy input operation without moving a hand holding the apparatus over a wide range on the display screen may be provided.

### BRIEF DESCRIPTION OF THE DRAWINGS

Fig. 1 is an external view of a cellular phone according to first to third embodiments;
Fig. 2 is a functional block diagram of the cellular phone in each of the embodiments;
Fig. 3 is a flowchart showing a screen operation process in the first embodiment;
Fig. 4A is a diagram for explaining a change on a screen when the flowchart in Fig. 3 is executed;
Fig. 4B is a diagram for explaining the change on the screen when the flowchart in Fig. 3 is executed;
Fig. 5 is a flowchart showing other screen operation process in the first embodiment;
Fig. 6A is a diagram for explaining a change on the screen when the flowchart in Fig. 5 is executed;
Fig. 6B is a diagram for explaining the change on the screen when the flowchart in Fig. 5 is executed;
Fig. 7 is a flowchart showing a screen operation process in the second embodiment;
Fig. 8A is a diagram for explaining a change on the screen when the flowchart in Fig. 7 is executed;
Fig. 8B is a diagram for explaining the change on the screen when the flowchart in Fig. 7 is executed;
Fig. 9 is a flowchart showing other screen operation process in the second embodiment;
Fig. 10A is a diagram for explaining a change on the screen when the flowchart in Fig. 9 is executed;
Fig. 10B is a diagram for explaining the change on the screen when the flowchart in Fig. 9 is executed;
Fig. 11 is a flowchart showing other screen operation process in the second embodiment;
Fig. 12A is a diagram for explaining a change on the screen when the flowchart in Fig. 11 is executed;
Fig. 12B is a diagram for explaining the change on the screen when the flowchart in Fig. 11 is executed;
Fig. 13 is a flowchart showing other screen operation process in the second embodiment;
Fig. 14A is a diagram for explaining a change on the screen when the flowchart in Fig. 13 is executed;
Fig. 14B is a diagram for explaining the change on the screen when the flowchart in Fig. 13 is executed;
Fig. 15 is a diagram and a graph for explaining a process of detecting that a finger is not in touch with the screen in a screen operation process in the third embodiment;
Fig. 16A is a diagram for explaining a change on the screen when the screen operation process in the third embodiment is executed;
Fig. 16B is a diagram for explaining the change on the screen when the screen operation process in the third embodiment is executed; and
Fig. 17 is a diagram for explaining a change on the screen when the screen operation process in the third embodiment is executed.

### DETAILED DESCRIPTION OF THE PREFERRED EMBODIMENTS

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

### (First Embodiment)

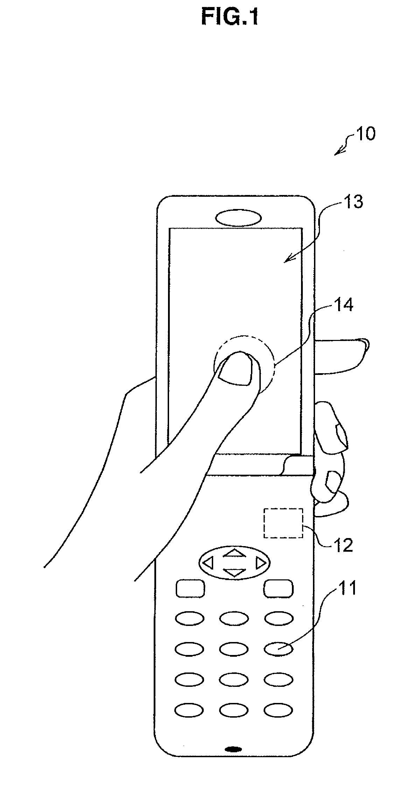

An overview of a display device (input device) according to a first embodiment of the present invention will be described using a cellular phone shown in Fig. 1 as an example. The cellular phone 10 includes buttons 11 each for supplying a numerical value or a character, an IC chip 12 that is built into the cellular phone and includes a CPU and a memory, and a liquid crystal display 13.

The liquid crystal display 13 is a display device which includes an image pickup device and picture elements. Since the liquid crystal display 13 includes an input function using a finger, the apparatus may be directly operated through a screen. The liquid crystal display 13 is not a capacitive or pressure-sensitive display in related art. The liquid crystal display 13 is a special I/O (Input/Output) display into which the image pickup device has been built and also functions as a touch panel. In other words, the liquid crystal display 13 can display an image thereon by the included picture elements, and detects touch states when fingers have touched the liquid crystal display 13 at multiple points by the built-in image pickup device. In this case, this input device detects a finger operation on the screen as a bitmap image. A virtual sign 14 is displayed on the touch point of a finger. The virtual sign 14 keeps on indicating a position at which the finger has first touched the liquid crystal display 13, as a reference point for subsequent movement of the finger until the finger separates from the screen.

With this arrangement, in addition to an ordinary calling and communicating function, the cellular phone 10 has an information input function and a user interface function that operates the cellular phone 10 according to input information, which may be achieved by the touch panel.

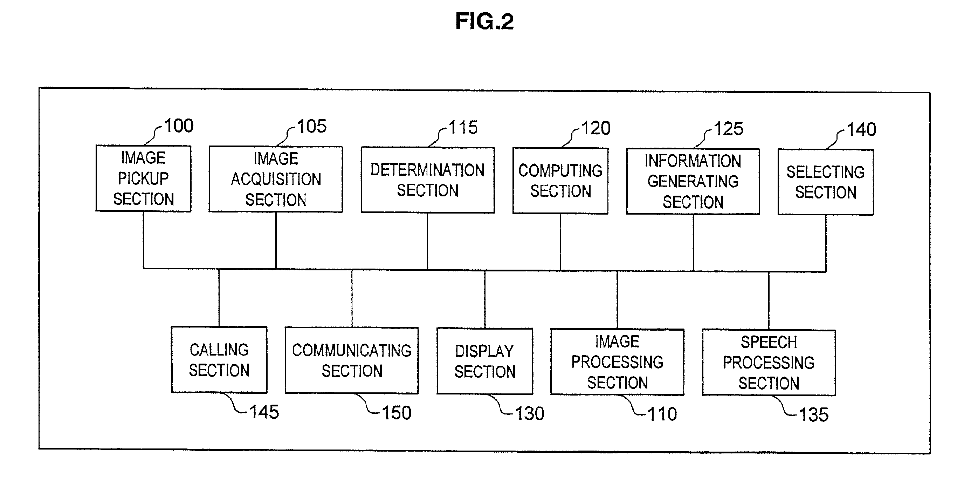

Next, a functional configuration of the cellular phone 10 will be described, with reference to a functional block diagram in Fig. 2. The cellular phone 10 includes functions indicated by an image pickup section 100, an image acquisition section 105, an image processing section 110, a determination section 115, a computing section 120, an information generating section 125, a display section 130, a speech processing section 135, a selecting section 140, a calling section 145, and a communicating section 150.

The image pickup section 100 photographs an image of a finger that has touched the liquid crystal display 130, using the image pickup device built into the liquid crystal display 130. The image pickup section 100 also photographs an image desired by a user, using a camera that has been built into the cellular phone 10 and is not shown. The finger is an example of an object for supplying desired information to the apparatus using the liquid crystal display 13. The finger is one of tools that supply information for implementing an operation desired by the user. In order to achieve this purpose, the finger is brought closer to the liquid crystal display 13 to a position where the cellular phone 10 may detect the finger, without touching the liquid crystal display 13, or is brought into touch with the liquid crystal display 13, for example.

The image acquisition section 105 obtains the image (of the finger) photographed by the image pickup section 100 for each frame. The image processing section 110 applies image processing such as binarization, noise removal, labeling, or the like, on the obtained image of the finger. With this arrangement, the image processing section 110 detects a region of the display screen being approached by the finger as an input portion. The image processing section 110 detects a portion of the image with high brightness after the image processing, for example, as the input portion. Brightness is the highest at a position where the finger touches the screen, because this position has no shadow. Accordingly, the contact area between the finger and the screen may be derived by the value of the brightness. The image processing section 110 generates information on the detected input portion, or point information indicating a predetermined feature of the input portion, for each frame.

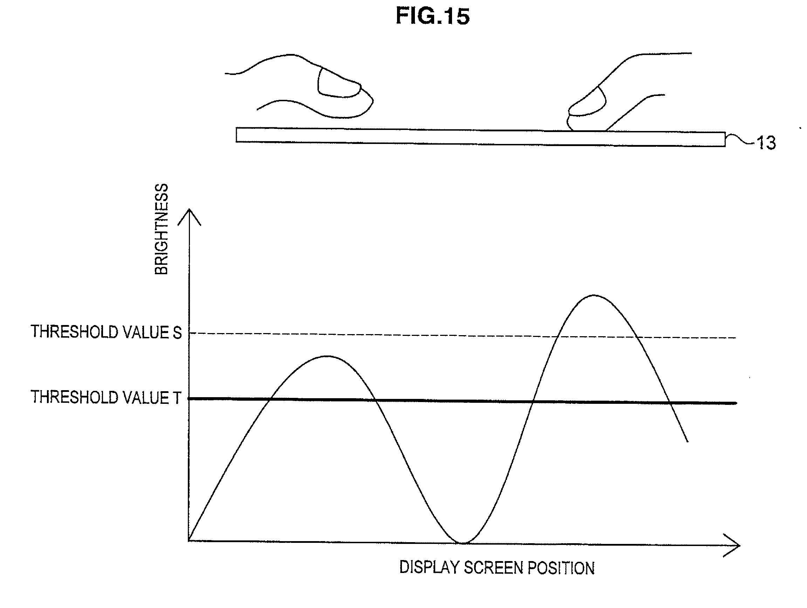

The determination section 115 determines whether the finger has touched the liquid crystal display 13 or not, based on the information resulted from the image processing by the image processing section 110. As shown in Fig. 15, the determination section 115 makes the determination based on the brightness of the obtained image. Specifically, when the brightness is larger than a predetermined threshold value S, the determination section 115 determines that the finger is in touch with the screen of the liquid crystal display 13. Then, when the brightness is smaller than the predetermined threshold value S but is larger than a threshold value T, the determination section 115 determines that the finger is in proximity to the screen at a position within a predetermined distance from the screen, without touching the screen. When the brightness is smaller than the threshold value T, the determination section 115 determines that the finger is apart from the liquid crystal display 13.

The computing section 120 performs clustering, based on the information resulting from the image processing by the image processing section 110, and then, determines a center-of-gravity position for each cluster. Then, the computing section 120 determines this center-of-gravity portion as the center-of-gravity position of the finger.

Based on a displacement of the center-of-gravity position of the finger corresponding to finger movement of the user, the information generating section 125 generates information for operating the cellular phone 10, as input information from the finger of the user. Specifically, the information generating section 125 computes a two-dimensional displacement using a difference between the center-of-gravity position of the finger that has been first depressed and the center-of-gravity position of the finger continued to be depressed. The information generating section 125 sets the displacement, as the input information from the finger. Based on this displacement, a map viewer, for example, keeps on scrolling a map when the finger is moving while depressing the screen, and stops scrolling when the finger is separated from the screen.

The display section 130 displays the virtual sign 14 at a position first determined by the determination section that the finger has touched the display screen of the display 13. The speech processing section 135 performs speech processing if necessary, and outputs speech resulted from the voice processing via a loudspeaker or a microphone not shown.

When the determination section 115 determines that the finger has approached the screen of the display 13 to a position capable of being detected without touching the screen and then has touched the screen based on the image of the finger obtained by the image acquisition section 105, the selecting section 140 specifies an arbitrary range of the screen including the contact position of the finger based on the contact area of the finger. Then, the selecting section 140 selects an image included in the specified range.

The calling section 145 establishes or disconnects communication for making a call to a desired party. The communicating section 150 transmits or receives information to/from other device through a network. With this arrangement, the cellular phone 10 according to this embodiment may function as a touch panel type input device capable of supplying a two-dimensional, floating point value for a subtle movement of a finger tip, by using a finger image.

A main function of the cellular phone 10 described above is actually achieved by a CPU built into the IC chip 12. The CPU reads a corresponding program from a memory where programs that describe processing procedures for implementing these functions, interprets the program, and executes the program.

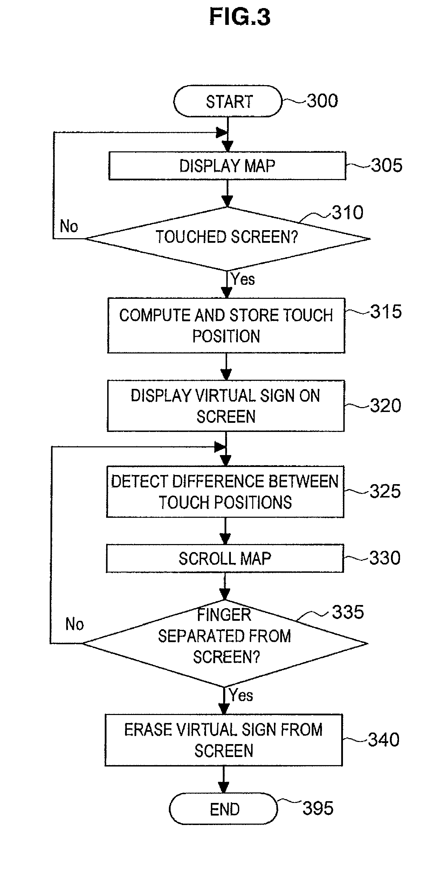

Next, an operation when the cellular phone 10 is functioned as the touch panel type input device will be described. First, referring to a flowchart shown in Fig. 3, a description will be given about a process of scrolling a map while displaying the virtual sign 14 on the screen of the cellular phone 10 when the finger is continuously in touch with the screen at one point of the screen.

### (Operation on Map While Displaying One Virtual Sign)

When the process is started from step 300, the display section 130 displays the map on the screen of the display 13 in step 305. Then, in step 310, the determination section 115 determines whether the finger has touched the screen or not. When the determination section 115 determines that the finger has not touched the screen, the operation returns to step 305. Then, steps 305 and 310 are repeated until it is determined that the finger has touched the screen.

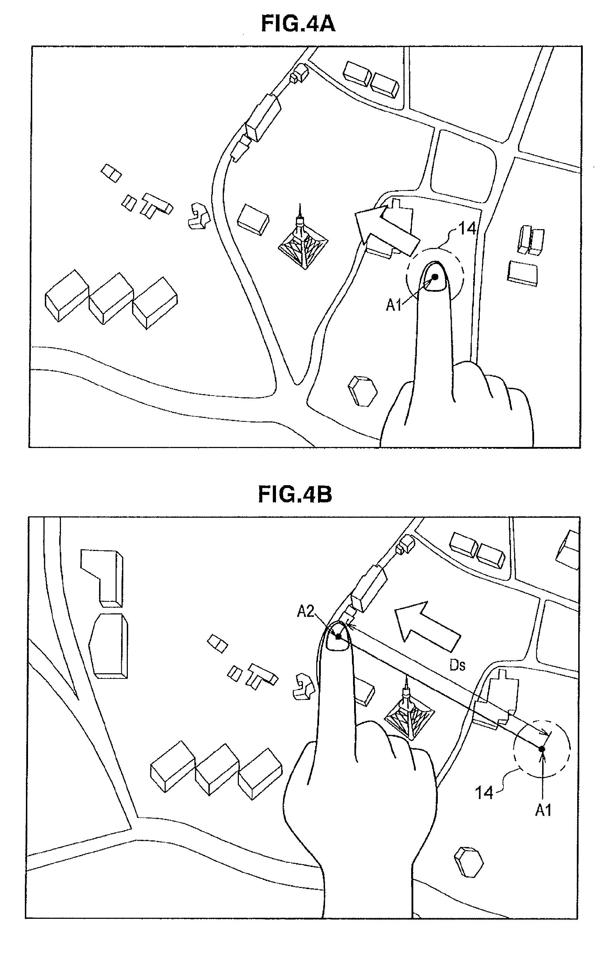

When it is determined in step 310 that the finger has touched the screen, the image pickup section 100 photographs the image of the finger using the image pickup device built into the display 13. The image acquisition section 105 then obtains the photographed image of the finger. The computing section 120 computes the center-of-gravity position of the finger, based on the obtained image of the finger, and stores the center-of-gravity position in the memory, in step 315. Then, in step 320, the display section 130 displays the virtual sign 14 at the computed center-of-gravity position of the finger. Fig. 4A shows a state where the virtual sign 14 has appeared at a position A1 for the first time when the finger has first touched the screen. The virtual sign 14 continues to be displayed at the position A1 of the screen as a reference point for a finger touch, while the finger is continuously in touch with the screen.

While it is determined by the determination section 115 that the finger is continuously in touch with the screen of the display 13, processes in steps 325 to 335 are repeated for every 1/60 seconds, for example. More specifically, in step 325, the information generating section 125 computes a displacement of the center-of-gravity position of the finger corresponding to movement of the finger, or a two-dimensional displacement from the virtual sign, based on a difference (distance) Ds between the center-of-gravity position A1 when the finger has been first depressed and a center-of-gravity position A2 of the finger that has moved while being continuously in touch with the screen. The obtained displacement is then used as the input information from the finger.

The display section 130 keeps on scrolling the map, based on the computed displacement while the finger is continuously in touch with the screen. The map viewer shown in Figs. 4A and 4B indicates that the map has been scrolled by a predetermined amount in a direction opposite to an arrow as a result of the finger having been moved from the position A1 to the position A2 by the distance Ds while being in touch with the screen.

Next, when it is determined in step 335 by the determination section 115 that the finger is in touch with the screen, the operation returns to step 325. On the contrary, when it is determined that the finger has separated from the screen, the displayed virtual sign 14 is erased from the screen. Then, in step 395, this process is finished.

According to the process described above, the screen may be scrolled by one hand without moving fingers of the hand holding the cellular phone 10 over a wide range on the screen. Further, the virtual sign is implemented by software. Thus, the virtual sign may be displayed at a desired position rather than a fixed position in related art implemented by hardware. Further, the virtual sign may be displayed at a desired timing of the user and may be erased. For this reason, an object on the screen that the user desires to gaze may be prevented from being hidden by a finger or the virtual sign. Moreover, since the screen may be readily scrolled in response to slight movement of the finger, the user may operate the cellular phone 10 while holding the cellular phone in various manners according to the situation.

### (Operation on Map While Displaying Two Virtual Signs)

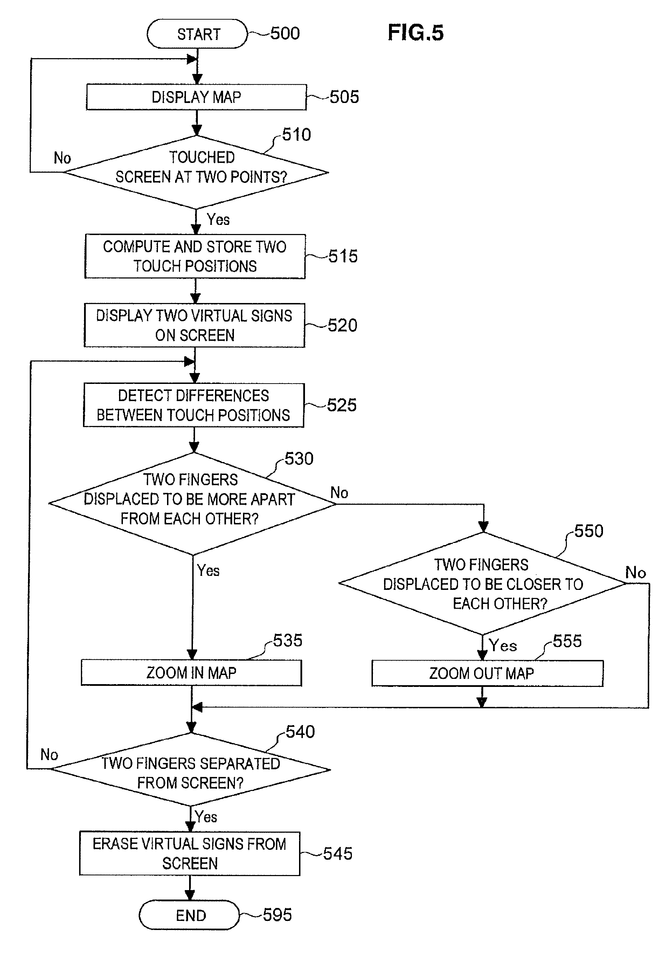

Next, a description will be given about a process of zooming in/out the map while displaying a plurality of the virtual signs 14 on the screen of the cellular phone 10, with reference to a flowchart shown in Fig. 5. In this case, fingers are continuously in touch with the screen at a plurality of points of the screen.

When the process in Fig. 5 is started from step 500, the display section 130 displays the map on the screen of the display 13 in step 505. In step 510, the determination section 115 determines whether two fingers have touched the screen at two points or not. When it is determined that the two fingers have not touched the screen, the operation returns to step 505, and steps 505 and 510 are repeated until it is determined that the two fingers have touched the screen.

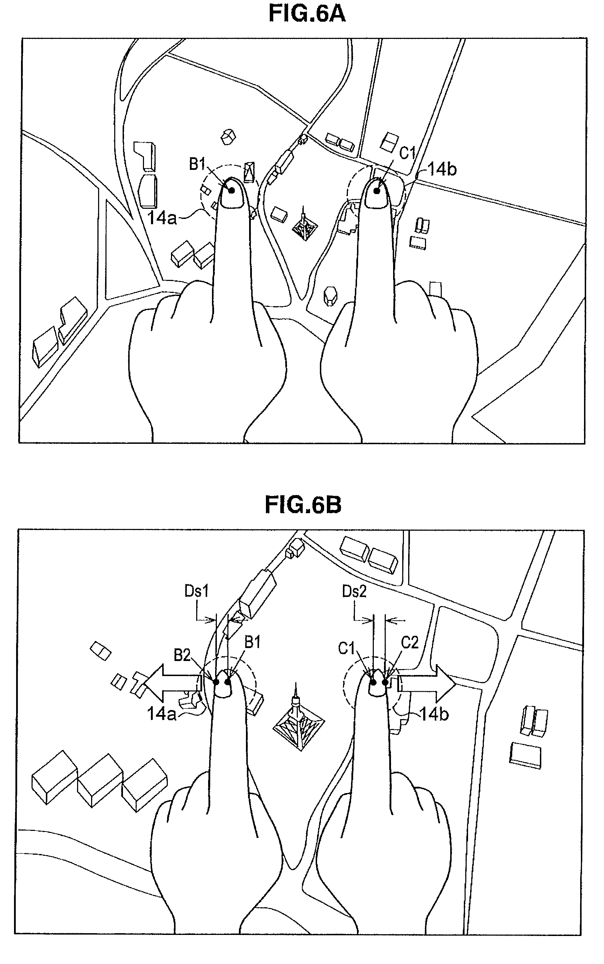

When it is determined in step 510 that the two fingers have touched the screen, the image pickup section 100 photographs images of the two fingers, respectively, using the image pickup device built into the display 13, in step 515. The image acquisition section 105 then obtains the photographed images of the two fingers. The computing section 120 calculates respective center-of-gravity positions of the two fingers, based on the images of the two fingers, and stores the computed center-of-gravity positions in the memory, in step 515. Next, the display section 130 displays virtual signs 14a and 14b at the computed center-of-gravity positions of the two fingers, respectively, in step 520. Fig. 6A shows a state where the virtual sign 14a has appeared at a position B 1 and the virtual sign 14b has appeared at a position C 1 when the two fingers touched the screen for the first time.

While it is determined by the determination section 115 that the fingers are continuously in touch with the screen of the display 13, processes in steps 525 to 540, or processes in steps 525, 530, 550 and 555 are repeated. More specifically, in step 525, the information generating section 125 computes a displacement of a center-of-gravity position B of one of the fingers and a displacement of a center-of-gravity position C of the other of the fingers corresponding to movements of the fingers which have taken place while the fingers are continuously in touch with the screen. The displacements are derived from a difference Ds1 between the first center-of-gravity position B1 and a center-of-gravity position B2 of the one of the fingers and a difference Ds2 between the center-of-gravity position C1 and a center-of-gravity position C2 of the other of the fingers. The obtained displacements are then used for the input information when the two fingers are used.

Based on the computed displacements, the display section 130 determines whether the center-of-gravity positions B1 and C 1 of the two fingers that have been first depressed have been displaced so that the two fingers are more apart. Referring to Fig. 6B, it can be seen that the center-of-gravity positions of the two fingers are displaced outward by inclining the fingers. Thus, the display section 130 zooms in the map by a predetermined amount, according to the computed displacements. In Fig. 6B, the two fingers are inclined, thereby displacing the center-of-gravity positions of the two fingers. The center-of-gravity positions of the two fingers may also be displaced by moving the fingers.

Next, the determination section 115 determines whether the fingers have separated from the screen or not, in step 540. When it is determined that the fingers have not separated from the screen, the operation returns to the step 525, and a difference between center-of-gravity positions of each of the two fingers is obtained again. Then, when it is determined that the two fingers are displaced to separate from each other based on the obtained differences, the map is continuously kept on being zoomed in, in step 535.

On the other hand, when it is determined in step 530 that the two fingers are not displaced to be more apart to each other, from the obtained differences, and then when it is determined in step 550 that the two fingers are displaced to be more close to each other based on the obtained differences, the operation proceeds to step 555. Then, the display section 130 zooms out the map by a predetermined amount, corresponding to the computed displacements.

The operation described above is performed until the two fingers are separated from the screen. Then, when it is determined in step 540 that the fingers have been separated from the screen, the virtual signs 14a and 14b are erased from the screen, in step 545. Then, this process is finished in step 595.

According to the zooming process described above, by using the two virtual signs 14a and 14b, different interactions may be implemented. In other words, a user interface that causes the cellular phone 10 to execute a different operation, using the two virtual signs 14a and 14b as indexes, may be established. In this user interface, according to a relative relationship between displacements of the center-of-gravity positions of the two fingers, a different operation may be executed.

In the process flow described above, for example, an operation of zooming in the map was implemented by displacing the center-of-gravity positions of the two fingers to be separated more. Then, an operation of zooming out the map was implemented by displacing the center-of-gravity positions of the two fingers to be more close to each other. The zooming operation described above is just like an operation of directly pulling the map to extend or contracting the map. As other example, assume that the center-of-gravity positions of the two fingers are displaced in parallel to the right. Then, the map to be displayed may be switched to the map showing an adjacent portion on the right at a current time, due to interaction between the center-of-gravity positions of the two fingers and displacements of the center-of-gravity positions of the respective fingers. The map may be then scrolled to the left.

In the zooming process described above, the map is zoomed while causing the two fingers to get in touch with the screen. The number of fingers used for executing the zooming process is not limited to two. A plurality of fingers may be used to touch the screen at the plurality of points within the range of the screen.

In the description described above, the virtual sign 14 was set to appear at an arbitrary position of the screen where the finger has touched. The virtual sign 14, however, may be displayed at a fixed position on the screen. With this arrangement, a plurality of the virtual signs 14 displayed at fixed positions may be set to have different functions. Then, a different function of the cellular phone 10 may be executed according to a position of the screen where the finger has touched. As an example of the different functions of the virtual signs 14, an example where the map is zoomed when the finger has touched one of the virtual signs 14 and the map is scrolled when the finger has touched another one of the virtual signs 14 may be pointed out.

### (Second Embodiment)

Next, a display device (input device) according to a second embodiment will be described. The device in the second embodiment is different from the device in the first embodiment in that a virtual sign is displayed at a fixed position on the screen. In the device in the first embodiment, the virtual sign is displayed at a position where a finger has first touched. Accordingly, the description will be given about this embodiment, centering on this difference.

### (Operation on Map While Displaying One Dial-type Fixed Virtual Sign)

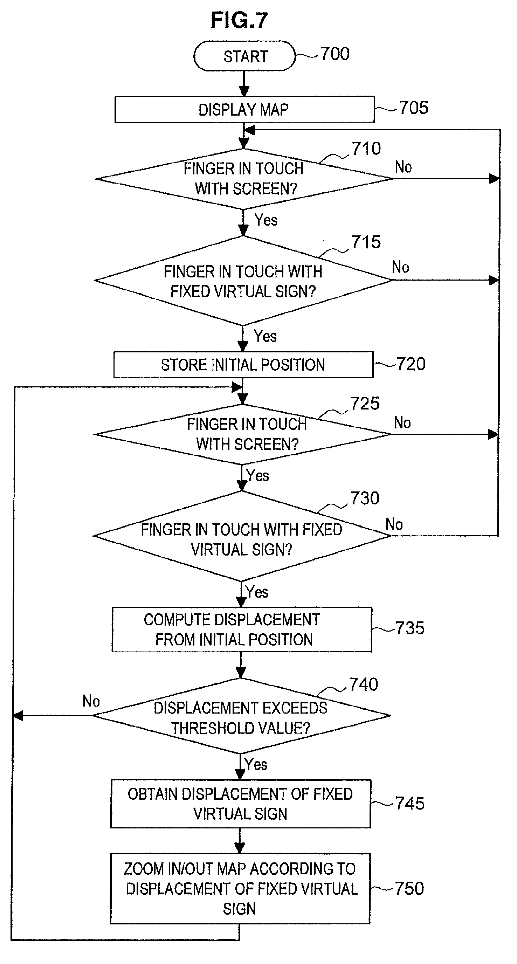

Next, a process of zooming a map by operating the virtual sign by a finger will be described with reference to a flowchart shown in Fig. 7.

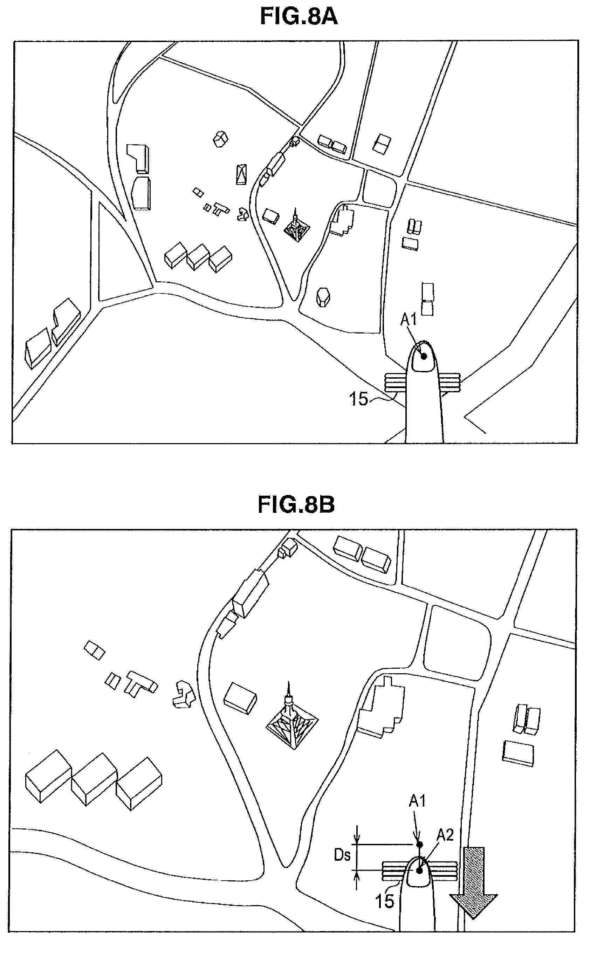

A dial-type fixed virtual sign 15 implements a pseudo dial-type input device. The pseudo dial-type input device is implemented by displaying a dial-type input device that bas been hitherto implemented by hardware, on the screen, by software. More specifically, as shown in Figs. 8A and 8B and as will be described later, the dial-type fixed virtual sign 15 is projected onto the screen of the display 13, and virtually rotates centering on an axis thereof, in response to movement of the finger. The dial-type fixed virtual sign 15 functions as the pseudo input device where input information for operating the cellular phone 10 is generated according to a state where the finger touches the dial-type fixed virtual sign 15.

When the process is started from step 700 in Fig. 7, the display section 130 displays the map on the screen of the display 13 in step 705. Then, the operation proceeds to step 710. The determination section 115 determines whether the finger is in touch with the screen or not. The process in step 710 is repeated until it is determined that the finger has touched the screen.

When it is determined that the finger has touched the screen, the operation proceeds to step 715. Then, the determination section 115 determines whether the finger has touched the dial-type fixed virtual sign 15 on the screen or not. When it is determined that the finger has not touched the dial-type fixed virtual sign 15, the operation returns to step 710. Then, the process in step 710 is repeated until it is determined that the finger has touched the dial-type fixed virtual sign 15.

When it is determined in step 715 that the finger has touched the dial-type fixed virtual sign 15, the image pickup section 100 photographs the image of the finger in touch with the dial-type fixed virtual signal 15 using the image pickup device built into the display 13, in step 720. The image acquisition section 105 then obtains the photographed image of the finger. The computing section 120 computes the center-of-gravity position of the finger based on the obtained image of the finger, and stores the computed value of the center-of-gravity position in the memory as an initial center-of-gravity position. Referring to Fig. 8A, the value of a center-of-gravity position A1 is stored in the memory.

Next, the operation proceeds to step 725. Then, the determination section 115 determines whether the finger is currently in touch with the screen. When it is determined that the finger is not in touch with the screen, the operation returns to step 710. When it is determined that the finger is currently in touch with the screen, the determination section 115 further determines whether the finger is currently in touch with the dial-type fixed virtual sign 15. When it is determined that the finger is not in touch with the dial-type fixed virtual sign 15, the operation returns to step 710, and the processes in steps 710 to 725 are repeated.

When it is determined that the finger is currently in touch with the dial-type fixed virtual sign 15, the operation proceeds to step 735. Using a difference Ds between a center-of-gravity position A1 of the finger when the finger has been first depressed and a center-of-gravity position A2 of the finger attained when the finger slides on the dial-type fixed virtual sign 15, the information generating section 125 computes a displacement of the center-of-gravity position of the finger (two-dimensional displacement of the dial-type fixed virtual sign) corresponding to movement of the finger. The obtained displacement is used for operating the screen, as input information from the finger.

The determination section 115 determines whether the computed displacement exceeds a predetermined threshold value or not, in step 740. When it is determined that the computed displacement does not exceed the predetermined threshold value, the operation returns to the process in step 725. On the other hand, when it is determined that the computed displacement exceeds the predetermined threshold value, the operation proceeds to step 745. The computing section 120 then computes a displacement (rotation amount) of the dial-type fixed virtual sign 15, based on the computed displacement of the center-of-gravity position. The rotation amount indicates an amount of change obtained by sliding the finger on the pseudo input device in one direction to increase or decrease a numerical value.

Next, the map is zoomed in/out, according to the obtained rotation amount of the dial-type fixed virtual sign 15 in step 750. Then, the operation returns to the process in step 725. The map viewer shown in Figs. 8A and 8B show that, as a result of the finger having being moved from the position A1 to the position A2 by the distance Ds while being touch with the screen, the map has been zoomed in.

According to the zooming process described above, it is first determined whether the finger is in touch with the dial-type fixed virtual sign 15 or not, which is touch determination. Then, an operation of sliding on the dial-type fixed virtual sign 15 by the finger of a user is detected, and a result of the detection is reflected on determination of an operation on the screen. The map viewer may zoom in/out the map, using a pseudo rotation amount and a pseudo rotating direction of the dial-type fixed virtual sign 15 that correspond to the amount and direction obtained when the finger slides on the dial-type fixed virtual sign 15.

A description will be given about an effect of the zooming process using the dial-type fixed virtual sign 15 in this embodiment, while clarifying a difference from a zooming process in related art. In a touch panel in the related art, in order to execute the zooming process, an operation of depressing a button or a scrollbar arranged on the screen or shifting the scrollbar is typically performed. In an interface where a numerical value is increased or decreased by a physical button, it is necessary to depress the physical button on the touch panel a plurality of times. When the scrollbar is used for the zooming process, a numerical value range will be limited. Further, in a physical input device, constraints such as the physical size (area and thickness) of the input device and the cost of the input device are generated. Consequently, a location where the input device is installed, the size of the input device, and the number of the input devices will be naturally limited.

However, in this embodiment, the pseudo input device is displayed on the screen by software. With this arrangement, the pseudo input device may be arranged anywhere, in any number, and at a desired timing, if the size of the input device is not larger than the size of the screen and the location of the input device is within the screen.

In the cellular phone 10 in this embodiment, the finger in touch with the screen of the display 13 is photographed by the image-pickup device built into the display 13, and the size (area) of the finger may be detected from the photographed image of the finger. With this arrangement, information which reflects the manner of touching the pseudo input device more faithfully and more appropriately may be supplied. When the pseudo input device is touched by the tip of the finger and moved, for example, a small displacement (numerical value increase or decrease) is received. When the pseudo input device is largely touched by the belly of the finger, a large displacement is received.

### (Operation on Map While Displaying Two Dial-type Fixed Virtual Signs)

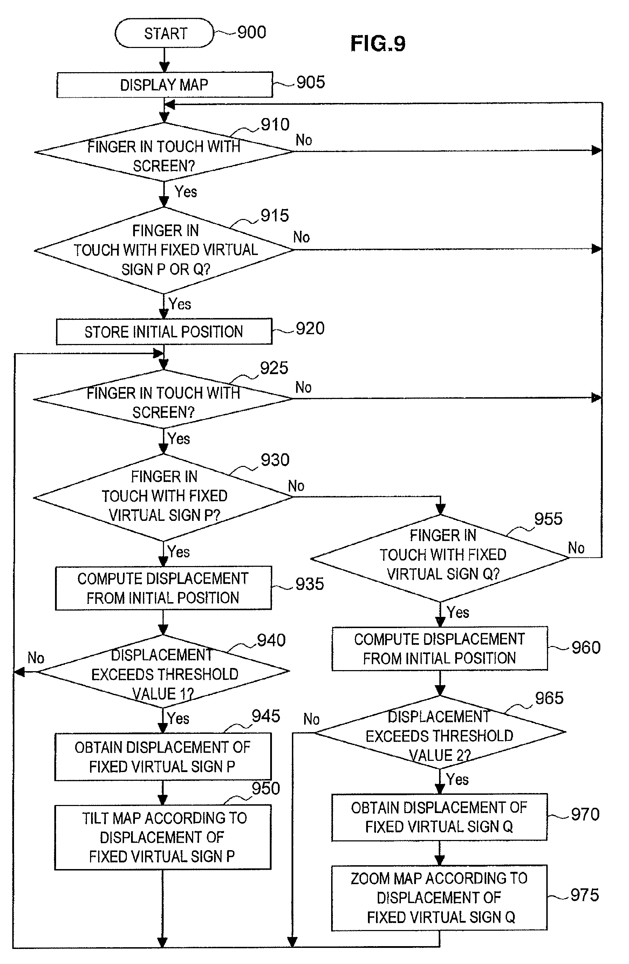

Next, a process of zooming or tilting the map by operating two dial-type fixed virtual signs 15 on the screen will be described, with reference to a flowchart shown in Fig. 9.

When the process is started from step 900 in Fig. 9, the map is displayed on the display 130 in step 905. In step 910, it is determined whether the finger is in touch with the screen. This determination process is repeated until the finger touches the screen.

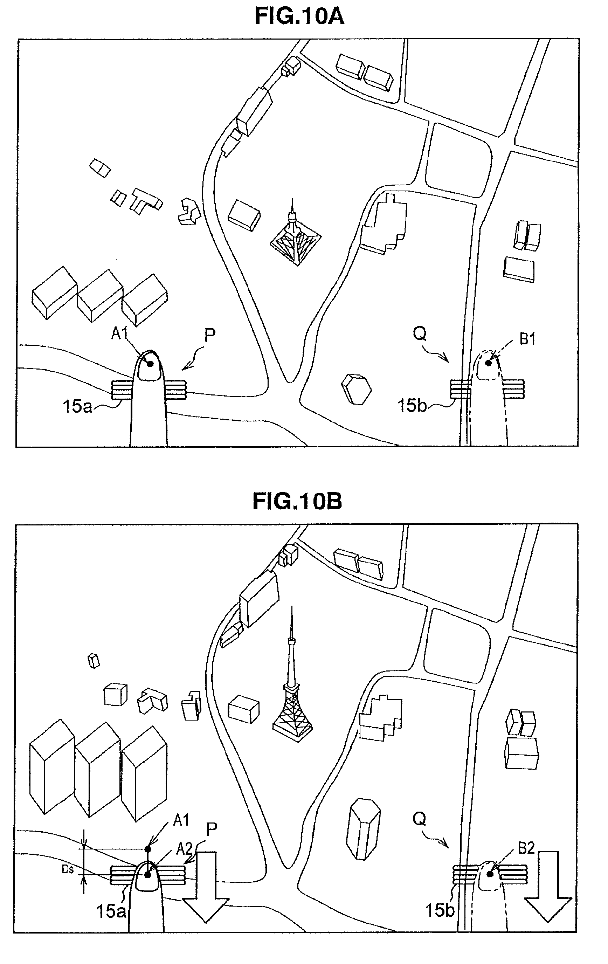

When it is determined that the finger has touched the screen, the operation proceeds to step 915. Then, the determination section 115 determines whether the finger has touched one of two dial-type fixed virtual signs P15a and Q15b on the screen in Fig. 10A. When it is determined that the finger is not in touch with any one of the two dial-type fixed virtual signs P15a and Q15b, the operation returns to step 910. Then, the determination process is repeated until it is determined that the finger has touched one of the two dial-type fixed virtual signs P15a and Q15b.

When it is determined that the finger has touched one of the two dial-type fixed virtual signs P15a and Q15b in step 915, the image pickup section 100 photographs the image of the finger in touch with the one of the two dial-type fixed virtual signs P15a and Q 15b. The image acquisition section 105 then obtains the photographed image of the finger. The computing section 120 computes the center-of-gravity position of the finger based on the obtained image of the finger. Then, the computing section 120 stores the value of the center-of-gravity position of the finger in the memory as an initial center-of-gravity position.

Referring to Fig. 10A, the finger is in touch with the dial-type fixed virtual sign P15a. Accordingly, a center-of-gravity position A1 shown in Fig. 10A is stored in the memory at a predetermined address.

Next, the operation proceeds to step 925. The determination section 115 determines whether the finger is currently in touch with the screen or not. When it is determined that the finger is not in touch with the screen, the operation returns to step 910. When it is determined that the finger is in touch with the screen, the determination section 115 further determines whether the finger is currently in touch with the dial-type fixed virtual sign P15a. When it is determined that the finger is not in touch with the dial-type fixed virtual sign P15a, the operation proceeds to step 955.

When it is determined that the finger is currently in touch with the dial-type fixed virtual sign P15a, the operation proceeds to step 935. Using a difference Ds between the center-of-gravity position A1 of the finger when the finger has been first depressed and a center-of-gravity position A2 of the finger attained when the finger slides on the dial-type fixed virtual sign 15a, the information generating section 125 computes a displacement of the center-of-gravity position of the finger corresponding to movement of the finger. The obtained displacement is used for operating the screen as input information from the finger.

The determination section 115 determines whether the computed displacement exceeds a predetermined threshold value 1 or not, in step 940. When it is determined that the computed displacement does not exceed the predetermined threshold value 1, the operation returns to the process in step 925. In this case, display of the screen remains unchanged.

On the other hand, when it is determined that the computed displacement exceeds the predetermined threshold value 1, the operation proceeds to step 945. Then, the computing section 120 computes a rotation amount of the dial-type fixed virtual sign P15a, which is a displacement of the dial-type fixed virtual sign P 15a, based on the computed displacement of the center-of-gravity position.

Next, the map is tilted according to the obtained rotation amount of the dial-type fixed virtual sign 15 in step 950. Then, the operation returns to the process in step 925. The map viewer illustrated in Figs. 10A and 10B show that, as a result of the finger having been moved from the position A1 to the position A2 by the distance Ds while being in touch with the screen, the map has been tilted in a back surface direction of the display.

Next, a case where the finger has touched the dial-type fixed virtual sign Q 15b will be described, starting from step 915. When it is determined in step 915 that the finger has touched the dial-type fixed virtual sign Q15b, the computing section 120 computes a center-of-gravity position B1 of the finger, based on the image of the finger in touch with the dial-type fixed virtual sign Q 15b, and stores the value of the center-of-gravity position B1 in the memory at a predetermined address, in step 920.

Next, when it is determined that the finger is in touch with the screen in step 925 and then it is determined that the finger is in touch with the dial-type fixed virtual sign Q 15b in step 955 following step 930, the operation proceeds to step 960. In step 960, the information generating section 125 computes a displacement of the center-of-gravity position of the finger corresponding to movement of the finger, using a difference between the center-of-gravity position B1 and a center-of-gravity position B2 of the finger. The determination section 115 determines whether the computed displacement exceeds a predetermined threshold value 2 or not, in step 965. When it is determined that the computed displacement does not exceed the predetermined threshold value 2, the operation returns to the process in step 925. In this case, display of the screen remains unchanged.

On the other hand, when the computed displacement exceeds the predetermined threshold value 2, the operation proceeds to step 970. Then, the computing section 120 computes a rotation amount of the dial-type fixed virtual sign Q15b, which is a displacement of the dial-type fixed virtual sign Q 15b, based on the computed displacement of the center-of-gravity position.

Next, the display section 130 zooms the map according to the obtained displacement of the dial-type fixed virtual sign Q 15b in step 975. Then the operation returns to the process in step 925.

According to the process described above, by displaying a plurality of the fixed virtual signs 15 within the screen, and by assigning different functions to the fixed virtual signs 15, respectively, various interactions may be designed.

### (Simultaneous Input Using Two Dial-type Virtual Signs)

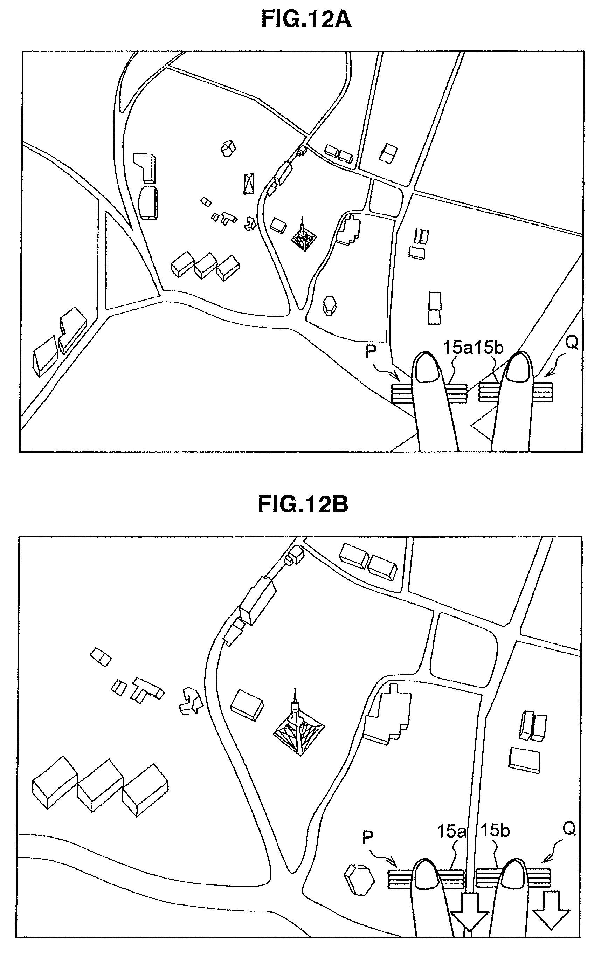

As other method of displaying a plurality of the fixed virtual signs 15 within the screen, a method of arranging the fixed virtual signs 15 adjacent to one another in a same direction, as shown in Figs. 12A and 12B, and performing simultaneous input operations on the fixed virtual signs 15 may be pointed out.

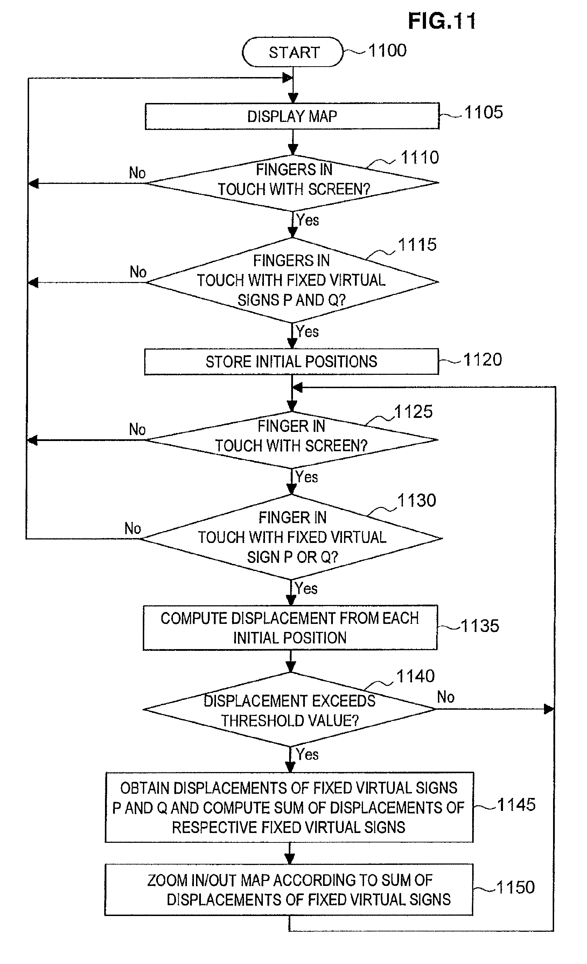

As shown in a processing flow in Fig. 11, in the process of simultaneously supplying information using two dial-type fixed virtual signs, same processes as those in steps 905 to 925 are executed in steps 1105 to 1125. Then, in step 1130, it is determined whether one of two fingers is in touch with at least one of fixed virtual signs P15a and Q15b or not. When it is determined that the one of the two fingers is in touch with the at least one of the fixed virtual sign 15P or 15B, the operation proceeds to step 1135, and a displacement (rotation amount) of each fixed virtual sign 15 which has been touched is computed. When it is determined in step 1140 that the displacement of the fixed virtual sign 15 exceeds a predetermined threshold value, a sum of the displacements of the fixed virtual signs 15 is computed in step 1145. Then, in step 1150, the map is zoomed, based on the sum of the displacements. Fig. 12B conceptually shows a state where the map is zoomed in, based on the sum of values of movement of the two fingers.

Alternatively, as other method of displaying a plurality of the fixed virtual signs 15 within the screen, a method of displaying the fixed virtual signs 15 not shown to adjacent to one another, being spaced apart from one another by 90 degrees, for example, may be pointed out. By arranging the two adjacent fixed virtual signs 15 at locations that induce vertical and horizontal rotations of the fixed virtual signs 15 by fingers as described above, an erroneous operation of the user may be prevented even if display locations of the respective fixed virtual signs 15 are close to one another.

### (Input Based on Location of One Dial-type Fixed Virtual Sign on which Finger Slides)

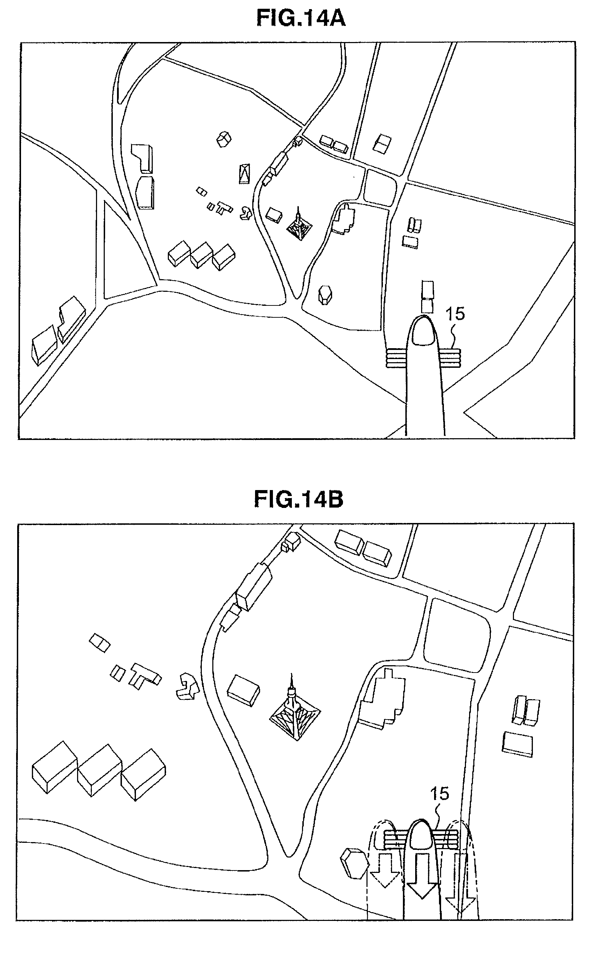

As other input method using one fixed virtual sign 15 displayed within the screen, a method of implementing the fixed virtual sign 15 capable of changing a change amount (rotation amount) according to a location of the fixed virtual sign 15 on which the finger slides, as shown in Figs. 14A and 14B, may be pointed out.

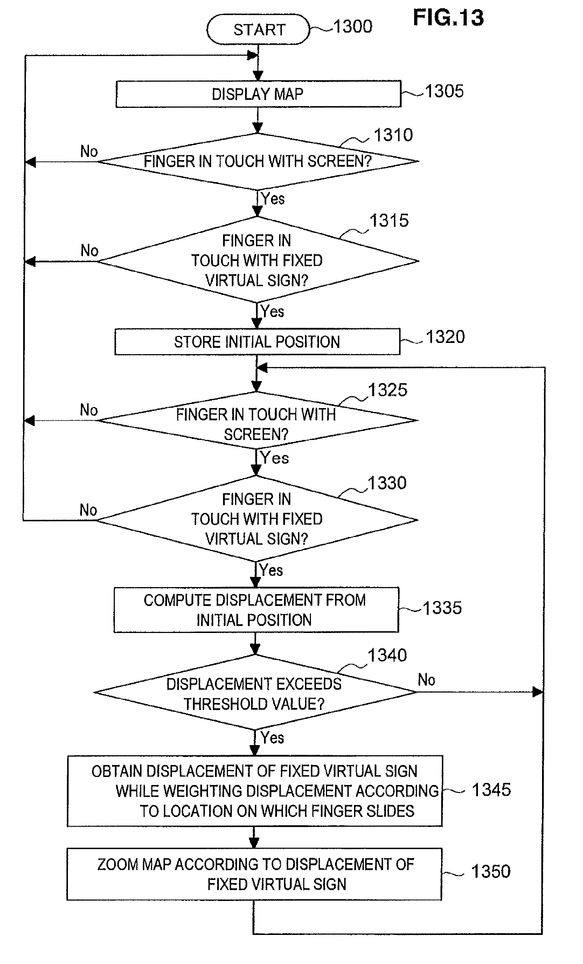

As shown in a processing flow in Fig. 13, in the process of supplying information based on a location of the fixed virtual sign 15 on which the finger slides, same processes as those in steps 700 to 740 in Fig. 7 are executed in steps 1300 to 1340. Then, in step 1345, the rotation amount (displacement) of the fixed virtual sign 15 is obtained while changing displacement weighting according to the location of the fixed virtual sign 15 on which the finger slides. Then, in step 1350, the map is zoomed, based on the rotation amount of the fixed virtual sign 15. Fig. 14B shows states where zooming levels change according to locations of the fixed virtual sign 15 on which the finger slides, by arrows. More specifically, when the finger slides on one of a left end portion, a central portion, and a right end portion of the fixed virtual sign 15, the map is zoomed by the change amount weighted according to the location of the fixed virtual sign 15 on which the finger slides. Referring to Fig. 14B, as shown by the arrows, the amount of zooming increases more when the finger slides on a righter end portion of the fixed virtual sign 15. Then, the amount of zooming decreases more when the finger slides on a lefter end portion of the fixed virtual sign 15.

As described above, in the input process using the dial-type fixed virtual sign 15 in this embodiment, according to which position of the pseudo input device on the screen the finger is slid, a finely adjusted finger movement and a great change in the movement amount of the finger may be accurately converted into input information from the finger.

In the screen input that uses the dial-type fixed virtual sign 15 in the second embodiment, the initial center-of-gravity position is set to an absolute position, and a displacement (absolute change) of the center-of-gravity position from the absolute position after movement of the finger is obtained. Then, based on the obtained displacement, an operation amount of the display of the cellular phone 10 is determined. However, the center-of-gravity position of the image at an immediately preceding or earlier time when the finger has touched the dial-type virtual sign 15 may be set to the initial center-of-gravity position. Then, a displacement (relative change) from the center-of-gravity position of the image at the immediately preceding or earlier time to the center-of-gravity position in the image at a current time may be obtained. Then, based on the obtained displacement, the operation amount of the display of the cellular phone 10 may be determined.

### (Third Embodiment)

Next, a display device (input device) according to the third embodiment will be described. The device according to the third embodiment implements an operation desired by a user by bringing a finger closer to a virtual sign on the screen to a position capable of detecting the object, without touching the screen. In this respect, the device according to the third embodiment is different from the display devices according to the first and second embodiments. The display devices in the first and second embodiments each implement an operation desired by the user by bringing the finger into touch with the virtual sign on the screen. The description will be therefore given, centering on this difference.

As described above, image processing as binarization, noise removal, or labeling is applied to the image of the finger that approaches the screen. The image of a portion with high brightness is then detected as an input portion. An example in Fig. 15 illustrates a threshold value S for detecting a touch of a finger and a threshold value T for detecting a state where the finger is not in touch with the screen but is present within a predetermined distance from the screen. The state where the finger is not in touch with the screen but is present within the predetermined distance may also be defined to be a state where the finger for supplying information to the screen is brought closer to the screen to a position capable of being detected, without touching the screen.

Referring to Fig. 15, a brightness peak detected with respect to movement of a finger on the right side is larger than the threshold value S. In this case, the determination section 115 determines that the finger is in touch with the screen. On the other hand, a brightness peak detected with respect to movement of a finger on the left side is larger than the threshold value T but smaller than the threshold value S. In this case, the determination section 115 determines that the finger is not in touch with the screen, but is approaching the screen to a position capable of being detected, without touching the screen. When the brightness peak is smaller than the threshold value T, presence of the finger is neglected.

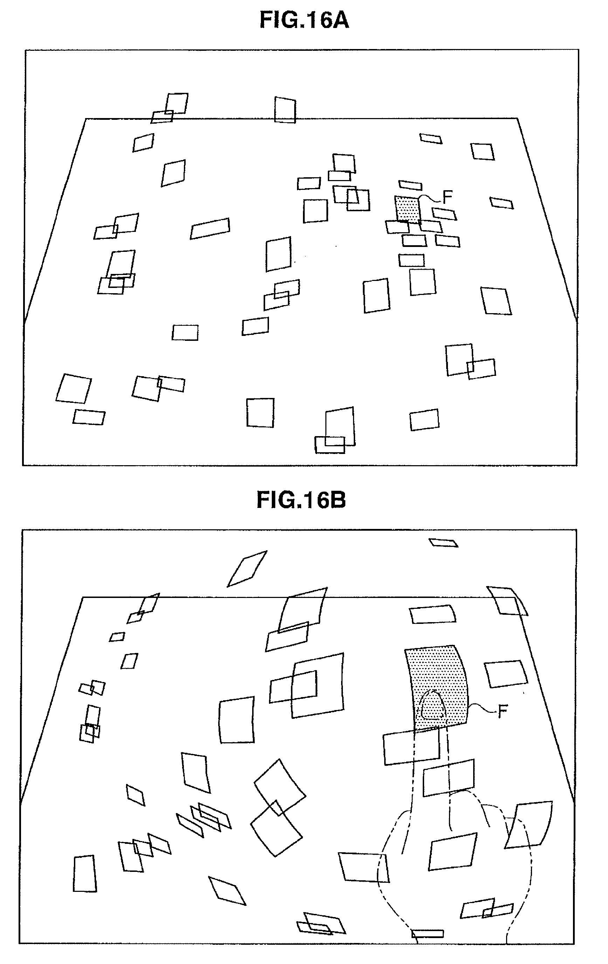

Fig. 16A shows a usual state where files are distributed and displayed. When it is determined that the finger is not in touch with the screen but has approached the screen to a position capable of being detected, for example, the display section 130 may also display a file that is located closer to a file F to be more distant from the file F by a distance greater than a usual distance from the file F, and may display a file that is located more distant to the file F to be closer to the file F by a distance shorter than a usual distance from the F, as shown in Fig. 16B. With this arrangement, the files that are two-dimensionally distributed, centering on the file F, may be displayed three-dimensionally.

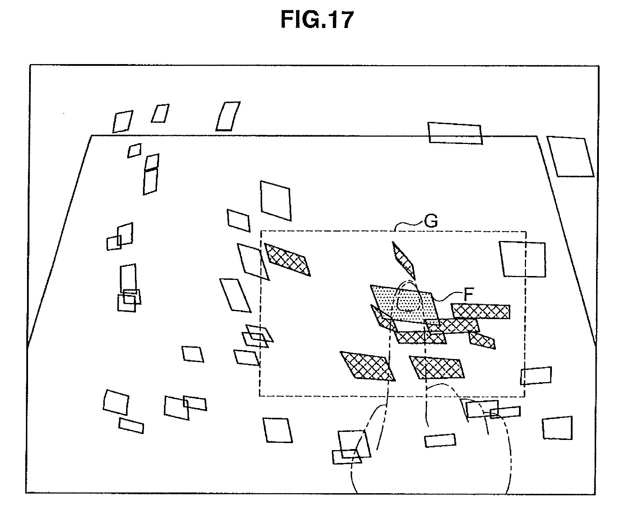

Assume that, based on the image of the finger in another frame obtained by the image acquisition section 105, it is determined that the finger has touched the screen after the determination section 115 has determined that the finger approached the screen to the position capable of being detected without touching the screen. The selecting section 140 then specifies an arbitrary range including the finger touch position of the screen, based on the contact area (brightness of the image) of the finger, and selects a file within the specified range. Referring to Fig. 17, files in a range G including the file F are selected. Selection of the files is established after a predetermined time (such as two seconds). When the finger touches the screen again, the screen returns to an initial state in Fig. 16A.

As described above, in the third embodiment, by bringing the finger closer to the screen within the predetermined distance without touching the screen, the cellular phone 10 may be operated in a state where the finger does not touch the screen. An interface, where a function of the cellular phone implemented when the finger has touched the display screen of the cellular phone and a function of the cellular phone implemented when the finger has approached the display screen by the predetermined distance without touching the screen are separately provided, may also be realized.

The display section 130 may take various display forms. For example, the display section 130 may change the color of a file instead of changing the display state of a file according to a state where the finger is close to the display screen or not.

Even in a state where the finger is brought closer to the screen within the predetermined distance from the screen without touching the screen, the cellular phone may also be operated, as described in the first and second embodiments.

According to the cellular phone 10 that includes the touch panel type input device in each embodiment, while the cellular phone 10 is held by one hand, an input operation may be implemented by the hand without moving a finger of the hand over a wide range on the display screen of the cellular phone 10.

The information generating section 125 may generate information for operating the cellular phone 10 so that a scrolling amount, a zooming amount, or a tilting amount of the display screen is changed, based on the brightness of the image of a finger with respect to the screen (or the size of the touch area between the finger and the screen). With this arrangement, control to more increase the change amount of the screen as the finger is more strongly depressed against the screen, for example, may be exercised.

The information indicating a displacement of the center-of-gravity position of the finger may include at least one of a difference (absolute or relative difference) between arbitrary two points on a moving trajectory of the finger, a moving direction of the finger, a moving speed of the finger, an acceleration of the finger, and the like. With this arrangement, control to more increase the change amount of the screen as the finger is moved faster, or control to more increase the change amount of the screen as the finger is moved faster and more abruptly, for example, may be exercised.

The cellular phone 10 that includes the display 13, described in each embodiment is an example of the apparatus that functions as an input device and a display device. The input device generates information for operating the apparatus as input information from an object, based on a displacement of the center-of-gravity position of the object corresponding to movement of the object. The display device operates screen display of the apparatus, based on the input information thus generated.

In the embodiments described above, operations of the respective portions may be associated with one another and may be replaced with a sequence of operations, with the mutual association being taken into consideration. The embodiment of the input device that uses the display screen may be thereby regarded as an embodiment of an input method using the display screen and an embodiment of a program for causing a computer to implement the functions of the input device. The embodiment of the display device that allows input using the display screen may be regarded as an embodiment of a display method using the display device that allows input using the display screen and an embodiment of a program for causing the computer to implement the functions of the display device.

It should be understood by those skilled in the art that various modifications, combinations, sub-combinations and alterations may occur depending on design requirements and other factors insofar as they are within the scope of the appended claims or the equivalents thereof.

In each embodiment, the cellular phone, for example, was taken as an example of the apparatus that includes the display device (or input device) and was described. The apparatus according to the present invention is not limited to this cellular phone. The display device or the input device of the present invention may be applied to a mobile type apparatus such as a portable information terminal including a personal digital assistant (PDA) or a game apparatus such as a play station portable (PSP).

## Claims

1. An input device comprising:
an image acquisition section that obtains an image of an object for supplying information to a display device of an apparatus, the image being obtained by bringing the object into touch with a screen of a display device of an apparatus or by bringing the object closer to the screen of the display device to a position capable of detecting the object without touching the screen, the display device being formed of a device including an image pickup device and picture elements;
a computing section that computes a center-of-gravity position of the object using the image of the object obtained by the image acquisition section; and
an information generating section that generates information for operating the apparatus based on a displacement of the center-of-gravity position of the object corresponding to movement of the object, as the input information from the object.

2. The input device according to claim 1, further comprising:
a determination section that determines whether the object has approached the display device to the position capable of being detected without touching the screen or has touched the display device, based on the image and/or on the brightness of the image of the object obtained by the image acquisition section.

3. The input device according to claim 2, wherein
while the determination section determines that the object is continuously approaching the position capable of being detected without touching the screen or is continuously in touch with the display device, the computing section repeats computation of the center-of-gravity position of the object; and
the information generating section keeps on generating the information for operating the apparatus, based on a displacement of the center-of-gravity position of the object repeatedly computed.

4. The input device according to claim 3, wherein
when the determination section determines that the object has separated from the display device by a predetermined distance or more, the computing section stops computing the center-of-gravity position of the object; and
the information generating section stops generating the information for operating the apparatus.

5. The input device according to claim 2, wherein
when the determination section determines that a plurality of the objects have approached the display device to positions capable of being detected at a plurality of points of the screen without touching the screen, or are continuously in touch with the display device at the points,
the information generating section generates the information for operating the apparatus, based on a relative relationship between displacements of the center-of-gravity portions of the objects at the points.

6. The input device according to claim 2, wherein
when the determination section determines that a plurality of the objects have approached the display device to positions capable of being detected at a plurality of points of the screen without touching the screen, or are continuously in touch with the display device at the points,
the information generating section generates the information for executing a different function of the apparatus, based on a displacement of the center-of-gravity portion of each of the objects at the respective points.

7. The input device according to claim 2, wherein
when the determination section determines that a plurality of the objects have approached the display device to positions capable of being detected at a plurality of points of the screen without touching the screen, or are continuously in touch with the display device at the points,
the information generating section generates the information for operating the apparatus, based on a sum of displacements of the center-of-gravity portions of the objects at the respective points.

8. The input device according to one of the claims 2 to 8, comprising
a display section that displays a virtual sign at a position first determined by the determination section that the object has touched the display device or at the position first determined by the determination section that the object has approached the display service without touching the screen, as a reference point for subsequent movement of the object.

9. The input device according to claim 8, wherein
the display section displays an image which is closer to the position approached by the object or the position touched by the object to be more distant from the object.

10. The input device according to one of the above-mentioned claims, further comprising
a selecting section that specifies an arbitrary range including a touch position of the object on the display device based on the brightness of the image of the object, and selects an image within the specified range when the determination section determines that the object has approached the display device to the position capable of being detected without touching the screen and then determines that the object has touched the display device based on the image of the object obtained by the image acquisition section.

11. The input device according to one of the above-mentioned claims, wherein
the information for operating the apparatus is used for one of controls of scrolling, zooming, and tilting an image displayed on the display device.

12. The input device according to claim 11, wherein
the information generating section generates the information for operating the apparatus so that an amount of scrolling, zooming, or tilting the image displayed on the display device is changed based on brightness of the image of the object.

13. The input device according to one of the above-mentioned claims, wherein
the information indicating the displacement of the center-of-gravity information of the objects includes at least one of a difference between arbitrary two points on a moving trajectory of the object, a moving direction of the object, a moving speed of the object, and an acceleration of the object.

14. An information input method comprising the steps of:
bringing an object for supplying information into touch with a screen of a display device or bringing the object closer to the screen of the display device or bringing the object closer to the screen of the display device to a position capable of detecting the object without touching the screen, thereby obtaining an image of the object, the display device being formed of a device including an image pickup device and picture elements;
computing a center-of-gravity position of the object based on the obtained image of the object; and
generating information for operating an apparatus including the display device, as input information from the object, based on a displacement of the center-of-gravity position of the object corresponding to movement of the obj ect.

15. An information input method according to claim 14 comprising the steps of:
obtaining brightness of the obtained image of the object and determining whether the object has approached the display device without touching the screen or has touched the display device, based on the obtained brightness; and
displaying a virtual sign at a position first determined that the object has touched the display device or at the position first determined that the object has approached the display device without touching the screen, as a reference point for subsequent movement of the object.
